# EUROPEAN PATENT SPECIFICATION

(11) **EP 2 301 655 B1**
(45) Date of publication and mention of the grant of the patent: **17.10.2018**
(21) Application number: 09828530.7
(22) Date of filing: 17.11.2009
(51) Int. Cl.: B01D 69/10, B01D 69/12, B01D 63/00, C02F 1/44

(54) **FILTERING ELEMENT**
FILTERELEMENT
ÉLÉMENT DE FILTRATION

(30) Priority: 25.11.2008 CN 200810227443
(43) Date of publication of application: 30.03.2011
(73) Proprietor: Beijing Rechsand Science & Technology Group Co., Ltd, Beijing 100085 (CN)
(72) Inventor: QIN, Shengyi, Beijing 100085 (CN)
(74) Representative: AWA Sweden AB
(86) International application number: PCT/CN2009/001275
(87) International publication number: WO 2010/060269

(56) References cited:
- CN-A- 1 621 140
- CN-A- 1 822 892
- CN-A- 101 227 968
- CN-A- 101 422 701
- JP-A- 54 057 476
- US-A- 4 874 516
- US-A- 5 914 039

## Description

### Technical field of the invention

The present invention relates to a filter element, more particularly to a filter element which can be comprised in a water treatment device.

### Technical background

Membrane bioreactor comprises a biological reaction tank and a membrane separation unit, characterized in that the quality of treated water is attractive, the treated water could be recycled; it requires relatively small space, the environmental adaptation is high; it is highly automatic, and it is easy to operate. The application of the membrane bioreactor is continuously developing, municipal wastewater treatment projects with capacity of 10,000t and 100,000t have been constructed, the number of the membrane bioreactor is continuously increasing, and thousands of membrane bioreactor projects have been carried out in many countries and regions around the world.

The membrane material used in the membrane separation unit may be divided to organic membrane and inorganic membrane. Inorganic membrane mainly includes metallic membrane, alloy membrane, haydite membrane, glass membrane, zeolite membrane and molecular sieve membrane, etc. Inorganic membrane possesses a number of advantages such as high chemical stability, acid/alkali resistance, organic solvent resistance; high mechanical strength, long lifetime; it could be back washed; inorganic membrane has high antimicrobial capacity, it does not react with microorganism; it is highly thermal stable; the pore size distribution is narrow, and the separation efficiency is high. At present, the commercialized inorganic membrane is mainly haydite membrane which is in form of plate, tube or multi-channel. However, the process of inorganic haydite membrane is rather complex, it is difficult to process and thus the price is high, the cost is around 4000∼10,000 RMB/m², furthermore, during filtration of inorganic haydite membrane, relatively high circulation flow is required between the biological unit and the membrane unit, which requires circulation pump with a relatively high power, as a result, the operation cost of the inorganic haydite membrane is relatively high. Therefore, its application is mainly limited to oil-water separation or recovery of certain chemical raw materials, for instance, recovery of titanium oxide powder, removal of precipitated heavy metal during petrochemical wastewater treatment, and recovery of latex from latex wastewater. The application of haydite membrane in membrane bioreactor is still under laboratory study, the global sales of separation membrane was above 10 billion USD by 2004, but the market share of inorganic membrane was only 12%.

WO2007/018393 describes a nanofiltation composite hollow fiber membrane comprising a reinforcement, a polymeric resin thin film on the reinforcement and a polyamide active layer on the surface of the polymeric resin film.

WO2005/009580 describes a composite membrane comprising a support layer of fiber type, a barrier layer providing selective separation and a middle layer providing binding between the support layer and the barrier layer.

JP 54 057476 A describes manufacture of a reinforced composite membrane by joining fiber substrate previously coated with polymer adhesive to a permeable membrane.

US 4 874 516 describes a filter which includes a substrate of a ceramic porous material, covered with a microporous membrane of a polymer, partly permeating the surface layer of the substrate and acting as a filer for fine particles.

Many of the well-known membrane bioreactors use organic membrane, and the related information of organic membrane bioreactor has been discussed in the following references (Gao Dalin, PALL Comparison of different membrane techniques. Tsing Hua University: Seminar of membrane techniques in water treatment, 2005: 228; The Purification Company (Norit). X-low recycling of wastewater, Tsing Hua University, China: International symposium of membrane technologies for water and wastewater treatment, 2005: 195; Zheng Xiang et. al. Technical and Economic Analysis of membrane bioreactor, water supply and sewerage, 28(3), 2002: 105∼108). Membrane bioreactor is normally made by coating organic filter membrane material on fabric or fiber tube, wherein organic membrane is generally made from petrochemical material or plastic, however, the strength of the fabric or fiber tube is relatively poor, therefore, the strength of the organic membrane bioreactor is low, membrane might break, especially breaks of membrane fiber is easy to occur on hollow fiber membrane, sometimes breaks of membrane fiber are observed in a few months after installation. Once membrane breaks, the quality of treated water becomes poor. When the quality of membrane influences the treatment performance, membrane element has to be replaced, in this case, the operation of waste water treatment system has to be stopped, the workload and cost of replacement are high, especially for relatively large scale membrane bioreactor, the replacement of membrane is more complex, and the impact of influence is more severe. Due to the fact that organic membrane is made from petrochemical products, the replacement of membrane means the consumption of a large amount of non-renewable petroleum, this problem will become more serious as petroleum shortage becomes more severe. Moreover, the replaced waste membrane part is difficult to treat, the resulting organic industrial waste leads to secondary environmental pollution and new environmental burden. Even if accidental damage of organic filter membrane is prevented, the economical and environmental problems involved in regular and periodic membrane replacement are huge, with the development in the application of membrane bioreactor, especially with the development in the application of large-scale municipal waste water treatment projects, the problem becomes more serious. Therefore, low membrane strength and short lifetime of organic membrane bioreactor have become key constraining factors and technical difficulties that prevent scale production and application of membrane bioreactor.

### Summary of the invention

The present invention aims at providing a filter element and water treatment device containing the filter element, in order to solve problems involved in current waste water treatment, for instance, the strength of organic membrane is poor, the lifetime is short, the production cost of inorganic membrane is high and the operation energy consumption is high.

To realize the objectives, the present invention provides a filter element in accordance with the appended set of claims. The filter element comprises a water permeable support and an organic filter membrane, wherein the water permeable support has an organic material layer included on its surface, the organic filter membrane is coated on the surface of the organic material layer and is combined with the organic material layer, and the organic filter membrane has a pore size of 0.0015µm∼20µm.

The water permeable support contains an aggregate and an organic adhesive coated on the aggregate, wherein the aggregate is quartz sand, haydite or glass microsphere.

The organic adhesive forms the organic material layer on the surface of the water permeable support.

The major ingredient of the organic filter membrane may be an organic filter membrane material which may be one or more of polyvinylidene fluoride, polyvinyl pyrrolidone, polyethersulfone, cellulose acetate, sulfonated polysulfone, sulfonated polyethersulfone, polyamide, polyvinyl alcohol and polyacrylonotrile.

The organic filter membrane material may have a hydrophilic group which may be hydroxyl, lactam or sulphon.

The organic material layer may be prepared by mixing the organic filter membrane material with an organic solvent to form a 1%∼10% organic filter membrane solution, and coating the solution on the water permeable support.

The water permeable support has a cavity therein and an outlet thereon, and the cavity is communicated with the outlet.

The number of the cavity may be one, and a support point may be provided in the cavity in order to reinforce the strength of the water permeable support.

The number of the cavities may be more than one, the cavities may be cylindrical and arranged paralleled along the water permeable support, a spacing wall may be provided between each two adjacent cavities in order to improve the strength of the water permeable support, and a respective outlet is located on the position corresponding to each cavity, or the cavities are communicated with each other and are together communicated with the outlet.

The water permeable support may have a water-collecting space at the side wall corresponding to the end surface of the cavities, and the cavities are communicated with each other at the water-collecting space; or pores are located on the spacing walls of the adjacent cavities, and the pores allow the cavities to be communicated with each other.

The water permeable support may be rectangular or cubic. Or, the water permeable support may have a wave structure, troughs on one side of the wavy structure are connected with corresponding peaks on another side facing the one side so that the cavities are formed.

The organic material layer is an organic adhesive layer, the organic adhesive may be a hydrophilic resin adhesive which is one or more of epoxy, polyurethane and acrylic resin, wherein the side chain of the epoxy, polyurethane and acrylic resin may contain hydrophilic carboxylate, sulfonate, ammonium salt, hydroxyl, or the back bone contains non-ionic hydrophilic segment.

The organic solvent may be dimethyl acetamide, formamide, ethylene glycol or ethylene glycol phenyl ether.

Herein is also provided a disclosure of a method for the manufacture of a filter element, including the following steps:
forming an organic material layer as the surface of a water permeable support; and
coating or spraying an organic filter membrane material on the surface of the organic material layer to form an organic filter membrane on the surface of organic material layer; or applying an organic filter membrane on the surface of the organic material layer;
wherein, the organic filter membrane has a pore size of 0.015µm∼20µm.

The water permeable support contains an aggregate and an adhesive coated on the aggregate.

The aggregate of the water permeable support is quartz sand, haydite or glass micro sphere.

The adhesive is an organic adhesive, and the organic adhesive forms the organic material layer on the surface of the water permeable support; or the water permeable support may have two layers which adhere to each other, in which the adhesive is an organic adhesive, and the organic adhesive forms the organic material layer on the surface of the water permeable support.

The method further includes the step of mixing the organic filter membrane material with an organic solvent to form a 1%∼10% organic filter membrane solution before coating or spraying the organic filter membrane material on the surface of the organic material layer.

The water permeable support has a cavity therein and an outlet thereon, and the cavity is communicated with the outlet.

The present invention also provides a water treatment device, comprising a filter device which comprises the above filter element.

The effects of present invention includes: filter element and water treatment device of present invention solve and overcome disadvantages of current membrane bioreactor, for instance, the strength of organic membrane is poor, the life time is relatively short, traditional inorganic haydite membrane is used which results in high production cost, operation energy consumption and operation cost, according to the present invention membrane of membrane bioreactor of fully utilizes natural, cheap and environmentally friendly material, the life time of membrane bioreactor is considerably improved (longer than the longest lifetime of organic membrane bioreactor reported in the articles), as a result, the resulting membrane bioreactor can be used in water treatment, waste water treatment and waste water recycle technique that is more practical, much easier to popularize and apply.

### Brief description of the drawings

Figure 1 illustrates filter element membrane layer of present invention;
Figure 2 illustrates Example of filter element of present invention;
Figure 3 illustrates a first Example of structure of filter element of Figure 2;
Figure 4 illustrates a second Example of structure of filter element of Figure 2;
Figure 5 illustrates a third Example of structure of filter element of Figure 2.

### Reference signs:

| | | | |
|---|---|---|---|
| 1 - | water permeable support | 2 - | organic filter membrane |
| 3 - | organic material layer | 4 - | support point |
| 5 - | outlet | 6 - | cylindrical structure |

### Mode of carrying out the invention

The structure and material of filter element of present invention are further illustrated with reference to the drawings.

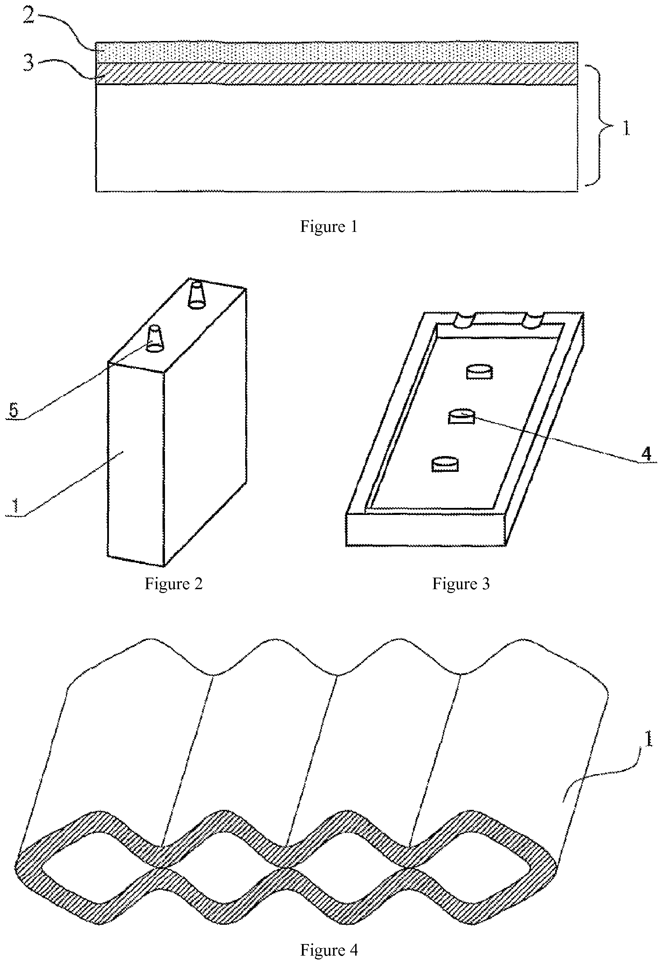

Figure 1 illustrates the filter element of present invention. As shown in Figure 1, the filter element of present invention contains a filter layer and a liner, wherein the filter layer is an organic filter membrane 2; the liner is a water permeable support 1, the water permeable support 1 has an organic material layer 3 on its surface, the organic filter membrane 2 covers and combines with the surface of organic material layer 3. Since the organic filter membrane combines well with the organic material layer, the organic filter membrane 2 combines firmly with the water permeable support 1 with the aid of the organic material layer 3.

The main ingredient of the organic filter membrane is an organic filter membrane material, the organic filter membrane material may be a hydrophilic material, and the organic filter membrane material may have a hydrophilic group, such as hydroxyl, lactam or sulphone. More specifically, the organic filter membrane material may be one or more of polyvinylidene fluoride (PVDF), polyvinyl pyrrolidone (PVP), polyethersulfone (PES), cellulose acetate, sulfonated polysulfone, sulfonated polyethersulfone, polyamide, polyvinyl alcohol and polyacrylonotrile. Furthermore, the pore size of the organic filter membrane 2 is small, fine and homogeneous, the pore size of the organic filter membrane is 0.0015µm∼20µm. The pore size of the water permeable support 1 is between 50∼200µm, and therefore irreversible membrane contamination could be effectively alleviated.

The organic material layer 3 is an organic adhesive layer, the organic adhesive is hydrophilic resin adhesive, the hydrophilic resin adhesive may be one or more of epoxy, polyurethane and acrylic resin, the side chain of which may contain hydrophilic carboxylate, sulfonate, ammonium salt, hydroxyl or the back bone contains non-ionic hydrophilic segment.

The organic filter membrane 2 on the surface of the organic material layer 3 may be prepared by mixing the organic filter membrane material with an organic solvent to form a 1%∼10% organic filter membrane solution, and coating or spraying the solution on the water permeable support 1, such that the organic material layer 3 on the surface of the water permeable support 1 is covered with the organic filter membrane 2; or may be prepared by directly coating an organic filter membrane on the surface of organic material layer 3. Wherein, the organic solvent may be dimethyl acetamide (DMAC), formamide, ethylene glycol or 2-phenoxyethanol.

Furthermore, the water permeable support contains aggregate and adhesive that covers the aggregate. The aggregate may be quartz sand, haydite or glass micro sphere.

The adhesive is an organic adhesive, and the organic adhesive forms the organic material layer on the surface of the water permeable support; or the water permeable support may have two layers which adhere to each other, in which the organic adhesive forms the organic material layer on the surface of the water permeable support. Wherein, when the aggregate is covered by the organic adhesive, and organic filter membrane material is coated on the surface of the organic adhesive-formed organic material layer, the strength of the water permeable support is improved considerably.

Figure 2 illustrates the filter element of Example of present invention, and Figure 3 illustrates the internal structure of filter element of Figure 2. It can be seen from Figure 2 and Figure 3 that the water permeable support is rectangular or cubic, the water permeable support 1 has a cavity, the cavity has a support point 4 to reinforce the strength of the water permeable support, the water permeable support 1 have outlet 5, the cavity is communicated with the outlet. The surface of the water permeable support contains organic material layer 3, the organic filter membrane 2 covers the surface of the organic material layer 3 to filter the waste water, therefore, the waste water passes through organic filter membrane 2 and water permeable support 1 before entering cavity of filter element, as a result, clean water is obtained in the cavity of filter element, all impurities and fouls are filtered by the organic filter membrane 2 of the filter element, furthermore, clean water in the cavity may be discharged from outlet 5.

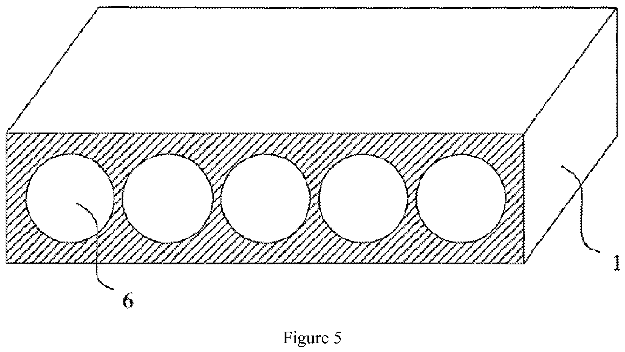

Moreover, as shown in Figure 4 and Figure 5, the water permeable support 1 may have more than one cavities, the cavities have cylindrical structure, and are paralleled arranged along the water permeable support, spacing walls are present between two adjacent cavities to reinforce the strength of the water permeable support, further, the presence of walls effectively improves the strength of the filter element. Wherein, a respective outlet is located on the position corresponding to each cavity, or the cavities are communicated with each other, and the cavities are together communicated with outlet, for instance, a water-collecting space is located on the side wall of end surface of the cavities (not shown in the Figure), the cavities are communicated with each other at the water-collecting space, or pores are located on the walls of the adjacent cavities (not shown in the Figure), and the cavities are communicated via the pores. Alternatively, the water permeable support may be rectangular or cubic, as shown in Figure 5, or the water permeable support has a wavy structure, troughs on one side of the wavy structure are connected with corresponding peaks on another side facing the one side so that the cavities are formed and walls between the cavities are formed, as shown in Figure 4, furthermore, due to the connection between trough on the opposite site of the wavy structure and the corresponding peak, the strength of the water permeable support is improved, in this way, it is served as support point as shown in Figure 3, the strength of the water permeable support of present invention is more attractive, and therefore, the performance of the filter element is further improved.

Furthermore, the Figures are only examples of structure of filter element of present invention, the filter element of present invention is not limited to the specific structures, besides the structures above, the water permeable support may be other structure, for instance, sphere, ellipsoid so that demand on different appearance may be met.

A method for making a filter element includes: water permeable support 1 is formed from quartz sand, haydite or glass microsphere with the aid of adhesive, and organic material layer 3 is formed on the surface of the water permeable support 1, during the step, when organic adhesive is applied, the organic adhesive forms the organic material layer on the surface of the water permeable support; thus, the water permeable support has two layers, wherein the organic adhesive forms the organic material layer on the surface of the water permeable support.

Furthermore, the method may include: organic filter membrane is covered on the organic material layer via coating, spraying, roll-coating or directly applying, more specifically, the organic filter membrane may be coated,
sprayed or roll-coated on the organic material layer, so that organic filter membrane is formed on the surface of the organic material layer, or organic filter membrane is applied on the surface of the organic material layer, so that the organic filter membrane is combined with the organic material layer, and the pore size of the organic filter membrane is 0.0015µm∼20µm. When aggregate covered by organic adhesive is applied, and organic filer membrane is formed on the surface of the organic material layer containing organic adhesive, the strength of the water permeable support is improved considerably.

Furthermore, the preferred organic material may be organic adhesive, the preferred organic adhesive may be hydrophilic resin adhesive, the hydrophilic resin adhesive is one or more of epoxy, polyurethane and acrylic resin, the chain of which contains hydrophilic carboxylate, sulfonate, ammonium salt, hydroxyl or the back bone contains non-ionic hydrophilic segment; moreover, the organic filter membrane is hydrophilic, the hydrophilic material may contain hydrophilic group, such as hydroxyl, lactam or sulphone, more specifically, the organic filter membrane is one or more of polyvinylidene fluoride, polyvinyl pyrrolidone, polyethersulfone, cellulose acetate, sulfonated polysulfone, sulfonated polyethersulfone, polyamide, polyvinyl alcohol and polyacrylonotrile, and the pore size of the organic filter membrane 2 is 0.0015µm∼20µm. Wherein, the application of organic filter membrane on the surface of the organic material layer 3 includes: the organic filter membrane is mixed with organic solvent to form 1%∼10% organic filer membrane solution, the membrane solution is coated, sprayed, or roll-coated on the water permeable support 1, so that the organic material layer 3 on the surface of the water permeable support 1 is covered with the organic filter membrane 2, wherein the organic solvent is dimethyl acetamide, formamide, ethylene glycol or 2-phenoxyethanol.

Furthermore, it may further include the following steps: a cavity is formed in the water permeable support, a support point 4 is formed in the cavity to improve the strength of the water permeable support 1, and outlet 5 is formed on the water permeable support 1 so that the cavity is communicated with the outlet. Wherein, organic material is directly coated, sprayed or roll-coated on the surface of the water permeable support 1 to form the organic material layer 3, and the organic filter membrane 2 is formed on the surface of the organic material layer 3.

The water permeable support may also be other structure, as shown in Figure 4 and Figure 5, the water permeable support may contain more than one cavities, wherein the cavities are cylindrical and they are arranged paralleled along the water permeable support, and spacing walls between two adjacent cavities may be used to reinforce the strength of the water permeable support. Wherein, a respective outlet is located on the position corresponding to each cavity, or the cavities are communicated with each other, and the cavities are together communicated with the outlet, for instance, water-collecting space is located on the side wall of end surface of the cavities, the cavities are communicated with each other at the water-collecting space, or pores are located on the walls of the adjacent cavities, and the pores are communicated with the cavities. Wherein, the water permeable support may be rectangular or cubic, as shown in Figure 5, or the water permeable support has wavy structure, as shown in Figure 4, wherein, trough on the opposite side of the wavy structure is connected with corresponding peak so that the cavities are separated and walls are formed between cavities.

Furthermore, the filter element of present invention may be used in filter device of different water treatment device (for instance, water treatment device, water purification device or system for lake, river, municipal water, agricultural water), that is, the filter device of the water treatment device may contain one or more filter elements of present invention, waste water treatment, waste water regeneration and water purification treatment are carried out with the aid of filter element of present invention, the utilization of filter element of present invention is in the protection scope of Claims of present invention.

The present invention may also contain other Examples, changes and modifications may be made by those skilled in the art based on present invention, however, the corresponding changes and modifications are in the protection scope of Claims of present invention.

### Industrial application

In the filter element of present invention, water permeable support is combined with organic filter membrane, and organic material layer is formed on the surface of the water permeable support, so that organic filter membrane is covered on the surface of the water permeable support due to the firm combination between the organic filter membrane and organic material layer, because the strength of the water permeable support is high and the combination between the organic filter membrane and organic material layer is firm, problems involved in current membrane bioreactor, such as the strength of organic membrane is poor, the lifetime is short, the production cost, operation energy consumption and cost of traditional organic haydite membrane is high, are solved and overcome. As a result, irreversible membrane contamination is effectively alleviated, organic filter membrane of membrane bioreactor fully utilizes natural, cheap and environmentally friendly materials, hence, the life time of membrane bioreactor is prolonged which is much longer that the longest reported lift time of 5∼10 years, the resulting membrane bioreactor could be used in water treatment, waste water treatment and waste water recycle technique that is more practical, much easier to popularize and apply.

Compared with the price of traditional haydite membrane (4,000∼10,000RMB/m²), the coated and sand-cast plate membrane is cheaper, the price is around 100-300 RMB/m², and cross-flow filtration is not required, and therefore, the energy consumption is low;

The present invention possesses a number of advantages, such as the water permeable rate is high, the strength is high, the life time is relatively long and it is acid-alkali resistant.

## Claims

1. A filter element, comprising a water permeable support (1) and an organic filter membrane (2), wherein the water permeable support (1) contains an aggregate and an organic adhesive coated on the aggregate, the aggregate of the water permeable support is quartz sand, haydite or glass microsphere, the organic adhesive forms an organic material layer (3) covering the aggregate as a surface of the water permeable support (1), the organic filter membrane (2) is coated on the surface of the organic material layer (3) and is combined with the organic material layer (3), and the organic filter membrane (2) has a pore size of 0.0015µm∼20µm, wherein the water permeable support (1) has a cavity therein and an outlet (5) thereon, and the cavity is communicated with the outlet (5).

2. The filter element of Claim 1, wherein the major ingredient of the organic filter membrane (2) is an organic filter membrane material which is one or more of polyvinylidene fluoride, polyvinyl pyrrolidone, polyethersulfone, cellulose acetate, sulfonated polysulfone, sulfonated polyethersulfone, polyamide, polyvinyl alcohol and polyacrylonotrile.

3. The filter element of Claim 2, wherein the organic filter membrane (2) is prepared by mixing the organic filter membrane material with an organic solvent to form a 1%∼10% organic filter membrane solution, and coating the solution on the water permeable support (1).

4. The filter element of Claim 1, wherein the number of the cavity is one, and a support point (4) is provided in the cavity in order to reinforce the strength of the water permeable support (1).

5. The filter element of Claim 1, wherein the number of the cavities is more than one, the cavities are cylindrical and arranged paralleled along the water permeable support (1), a spacing wall is provided between each two adjacent cavities in order to improve the strength of the water permeable support (1), and a respective outlet is located on the position corresponding to each cavity, or the cavities are communicated with each other and are together communicated with the outlet.

6. The filter element of Claim 5, wherein the water permeable support (1) has a water-collecting space at the side wall corresponding to the end surface of the cavities, and the cavities are communicated with each other at the water-collecting space; or pores are located on the spacing walls of the adjacent cavities, and the pores allow the cavities to be communicated with each other.

7. The filter element of any one of Claims 1 to 6, wherein the water permeable support (1) is rectangular or cubic.

8. The filter element of any one of Claims 1 to 6, wherein the water permeable support (1) has a wave structure, troughs on one side of the wavy structure are connected with corresponding peaks on another side facing the one side so that the cavities are formed.

9. The filter element of any one of Claims 1 to 6, wherein the organic adhesive is a hydrophilic resin adhesive which is one or more of epoxy, polyurethane and acrylic resin, wherein the side chain of the epoxy, polyurethane and acrylic resin contains hydrophilic carboxylate, sulfonate, ammonium salt, hydroxyl, or the back bone contains non-ionic hydrophilic segment.

10. The filter element of Claim 2 or 3, wherein the organic filter membrane material contains a hydrophilic group which is hydroxyl, lactam or sulphon.

11. The filter element of Claim 3, wherein the organic solvent is dimethyl acetamide, formamide, ethylene glycol or ethylene glycol phenyl ether.

12. A water treatment device, comprising a filter device which comprises the filter element of any one of Claim 1 to Claim 11.

## Patentansprüche

1. Filterelement, umfassend einen wasserdurchlässigen Träger (1) und eine organische Filtermembran (2), wobei der wasserdurchlässige Träger (1) ein Aggregat und einen auf dem Aggregat aufgetragenen organischen Klebstoff enthält, das Aggregat des wasserdurchlässigen Trägers Quarzsand, Haydite oder Glas-Mikrokügelchen ist, der organische Klebstoff eine organische Materialschicht (3) bildet, die das Aggregat als Oberfläche des wasserdurchlässigen Trägers (1) bedeckt, die organische Filtermembran (2) auf der Oberfläche der organischen Materialschicht (3) aufgetragen ist und mit der organischen Materialschicht (3) kombiniert ist, und die organische Filtermembran (2) eine Porengröße von 0,0015 µm - 20 µm aufweist, wobei der wasserdurchlässige Träger (1) einen Hohlraum darin und einen Auslass (5) darauf aufweist, und der Hohlraum mit dem Auslass (5) in Verbindung steht.

2. Filterelement nach Anspruch 1, wobei der Hauptbestandteil der organischen Filtermembran (2) ein organisches Filtermembranmaterial ist, das eines oder mehrere von Polyvinylidenfluorid, Polyvinylpyrrolidon, Polyethersulfon, Celluloseacetat, sulfoniertem Polysulfon, sulfoniertem Polyethersulfon, Polyamid, Polyvinylalkohol und Polyacrylnitril ist.

3. Filterelement nach Anspruch 2, wobei die organische Filtermembran (2) durch Mischen des organischen Filtermembranmaterials mit einem organischen Lösungsmittel zur Bildung einer 1%-10%igen organischen Filtermembranlösung und durch Auftragen der Lösung auf den wasserdurchlässigen Träger (1) hergestellt wird.

4. Filterelement nach Anspruch 1, wobei die Anzahl des Hohlraums eins beträgt und ein Unterstützungspunkt (4) im Hohlraum vorgesehen ist, um die Festigkeit des wasserdurchlässigen Trägers (1) zu verstärken.

5. Filterelement nach Anspruch 1, wobei die Anzahl der Hohlräume mehr als ein beträgt, die Hohlräume zylinderförmig und parallel entlang des wasserdurchlässigen Trägers (1) angeordnet sind, eine Abstandswand zwischen jeweils zwei benachbarten Hohlräumen vorgesehen ist, um die Festigkeit des wasserdurchlässigen Trägers (1) zu verbessern, und ein jeweiliger Auslass an der jedem Hohlraum entsprechenden Position angeordnet ist, oder die Hohlräume miteinander in Verbindung stehen und gemeinsam mit dem Auslass in Verbindung stehen.

6. Filterelement nach Anspruch 5, wobei der wasserdurchlässige Träger (1) einen Wassersammelraum an der Seitenwand aufweist, die der Endfläche der Hohlräume entspricht, und die Hohlräume miteinander am Wassersammelraum in Verbindung stehen; oder Poren an den Abstandswänden der benachbarten Hohlräume angeordnet sind, und die Poren es den Hohlräumen gestatten, miteinander in Verbindung zu stehen.

7. Filterelement nach einem der Ansprüche 1 bis 6, wobei der wasserdurchlässige Träger (1) rechteckig oder würfelförmig ist.

8. Filterelement nach einem der Ansprüche 1 bis 6, wobei der wasserdurchlässige Träger (1) eine Wellenstruktur aufweist, wobei Mulden auf einer Seite der Wellenstruktur mit entsprechenden Spitzen auf einer anderen Seite, die der einen Seite zugewandt ist, verbunden sind, so dass die Hohlräume gebildet werden.

9. Filterelement nach einem der Ansprüche 1 bis 6, wobei der organische Klebstoff ein hydrophiler Harzklebstoff ist, der eines oder mehrere von Epoxid-, Polyurethan- und Acrylharz ist, wobei die Seitenkette des Epoxid-, Polyurethan- und Acrylharzes hydrophiles Carboxylat, Sulfonat, Ammoniumsalz, Hydroxyl enthält, oder das Gerüst ein nicht-ionisches hydrophiles Segment enthält.

10. Filterelement nach Anspruch 2 oder 3, wobei das organische Filtermembranmaterial eine hydrophile Gruppe enthält, die Hydroxyl, Lactam oder Sulfon ist.

11. Filterelement nach Anspruch 3, wobei das organische Lösungsmittel Dimethylacetamid, Formamid, Ethylenglykol oder Ethylenglykolphenylether ist.

12. Wasseraufbereitungsvorrichtung, umfassend eine Filtervorrichtung, die das Filterelement nach einem der Ansprüche 1 bis Anspruch 11 umfasst.

## Revendications

1. Élément filtrant, comprenant un support perméable à l'eau (1) et une membrane filtrante organique (2), dans lequel le support perméable à l'eau (1) contient un agrégat et un adhésif organique appliqué de façon à former un revêtement sur l'agrégat, l'agrégat du support perméable à l'eau étant constitué d'un sable quartzeux, d'un schiste expansé ou de microsphères de verre, l'adhésif organique forme une couche de matériau organique (3) recouvrant l'agrégat en tant que surface du support perméable à l'eau (1), la membrane filtrante organique (2) est appliquée de façon à former un revêtement sur la surface de la couche de matériau organique (3) et est combinée avec la couche de matériau organique (3), et la membrane filtrante organique (2) a une taille de pore de 0,0015 µm∼20 µm, dans lequel le support perméable à l'eau (1) contient une cavité et comporte une sortie (5) sur ledit support, et la cavité est en communication avec la sortie (5).

2. Élément filtrant selon la revendication 1, dans lequel l'ingrédient principal de la membrane filtrante organique (2) est un matériau de membrane filtrante organique qui est un ou plusieurs du fluorure de polyvinylidène, de la polyvinylpyrrolidone, de la polyéthersulfone, de l'acétate de cellulose, de la polysulfone sulfonée, de la polyéthersulfone sulfonée, d'un polyamide, de l'alcool polyvinylique et du polyacrylonitrile.

3. Élément filtrant selon la revendication 2, dans lequel la membrane filtrante organique (2) est préparée en mélangeant le matériau de membrane filtrante organique avec un solvant organique pour former une solution de membrane filtrante organique à 1 %~10 %, et en appliquant la solution de façon à former un revêtement sur le support perméable à l'eau (1).

4. Élément filtrant selon la revendication 1, dans lequel le nombre de cavités est de 1, et un point de support (4) est présent dans la cavité afin de renforcer la résistance du support perméable à l'eau (1) .

5. Élément filtrant selon la revendication 1, dans lequel le nombre de cavités est supérieur à 1, les cavités sont cylindriques et disposées parallèlement le long du support perméable à l'eau (1), une paroi de séparation est présente entre chacune de deux cavités adjacentes afin d'améliorer la résistance du support perméable à l'eau (1), et une sortie respective est située à l'emplacement correspondant à chaque cavité, ou les cavités sont en communication les unes avec les autres et sont ensemble en communication avec la sortie.

6. Élément filtrant selon la revendication 5, dans lequel le support perméable à l'eau (1) comporte un espace de collecte d'eau au niveau de la paroi latérale correspondant à la surface d'extrémité des cavités, et les cavités sont en communication les unes avec les autres au niveau de l'espace de collecte d'eau ; ou des pores sont présents sur les parois de séparation des cavités adjacentes, et les pores permettent aux cavités de communiquer les unes avec les autres.

7. Élément filtrant selon l'une quelconque des revendications 1 à 6, dans lequel le support perméable à l'eau (1) est rectangulaire ou cubique.

8. Élément filtrant selon l'une quelconque des revendications 1 à 6, dans lequel le support perméable à l'eau (1) a une structure ondulée, les creux sur un côté de la structure ondulée étant reliés aux sommets correspondants sur un autre côté faisant face audit côté de façon à former les cavités.

9. Élément filtrant selon l'une quelconque des revendications 1 à 6, dans lequel l'adhésif organique est un adhésif de type résine hydrophile qui est une ou plusieurs d'une résine époxyde, d'une résine de polyuréthane et d'une résine acrylique, la chaîne latérale de la résine époxyde, de la résine de polyuréthane et de la résine acrylique contenant un groupe hydrophile carboxylate, sulfonate, sel d'ammonium ou hydroxyle, ou le squelette contenant un segment hydrophile non ionique.

10. Élément filtrant selon la revendication 2 ou 3, dans lequel le matériau de membrane filtrante organique contient un groupe hydrophile qui est un groupe hydroxyle, lactame ou sulfone.

11. Élément filtrant selon la revendication 3, dans lequel le solvant organique est le diméthylacétamide, le formamide, l'éthylène glycol ou le phényléther d'éthylène glycol.

12. Dispositif de traitement de l'eau, comprenant un dispositif filtrant qui comprend l'élément filtrant selon l'une quelconque des revendications 1 à 11.
